# EUROPÄISCHE PATENTANMELDUNG

(11) **EP 1 500 864 A2**
(43) Veröffentlichungstag der Anmeldung: **26.01.2005**
(21) Anmeldenummer: 04015901.4
(22) Anmeldetag: 06.07.2004
(51) Int. Cl.: F17C 5/00

(54) **Verfahren zum Betanken eines Fahrzeuges**

(30) Priorität: 25.07.2003 DE 10334055
(71) Anmelder: Linde Aktiengesellschaft, 65189 Wiesbaden (DE)
(72) Erfinder: Adler, Robert, 2201 Gerasdorf (AT); Mayer, Helmut, 3451 Rust im Tullnerfeld (AT)
(74) Vertreter: Zahn, Christoph

(57) **Zusammenfassung**

Es wird ein Verfahren zum Betanken eines Fahrzeuges mit einem unter Druck stehenden Gas, insbesondere mit komprimiertem Erdgas oder komprimiertem Wasserstoff, wobei das unter Druck stehende Gas mittels eines oder mehrerer Trailer bereitgestellt wird, beschrieben.

Erfindungsgemäß
- wird der oder die Speicherbehälter des zu betankenden Fahrzeuges (F) bis zum Erreichen eines Zwischendruckes aus dem oder den Trailern (T) mit dem unter Druck stehenden Gas befüllt und
- nach Erreichen des Zwischendruckes wird das unter Druck stehende Gas aus dem oder den Trailem (T) zumindest auf den gewünschten Enddruck verdichtet (V) und dem oder den Speicherbehältern des zu betankenden Fahrzeuges (F) zugeführt und/oder
- nach Erreichen des Zwischendruckes werden der oder die Speicherbehälter des zu betankenden Fahrzeuges (F) aus wenigstens einem Zwischenspeicher (S), in dem verdichtetes (V) Gas zwischengespeichert ist, mit dem unter Druck stehenden Gas befüllt.

## Beschreibung

Die Erfindung betrifft ein Verfahren zum Betanken eines Fahrzeuges mit einem unter Druck stehenden Gas, insbesondere mit komprimiertem Erdgas oder komprimiertem Wasserstoff, wobei das unter Druck stehende Gas mittels eines oder mehrerer Trailer bereitgestellt wird.

Unter dem Begriff "Trailer" werden allgemein mobile Gasspeicher, die üblicherweise einen Speicherdruck bis zu 200 bar und ein Speichervolumen bis zu 6000 m³ aufweisen, verstanden.

Erdgas wird seit einigen Jahrzehnten - in mehr oder weniger großem Umfang - als "Treibstoff" für Kraftfahrzeuge verwendet. Hierbei erfolgt die Speicherung des Erdgases in den Fahrzeugen in komprimierter Form, vorzugsweise bei einem Druck bis zu 300 bar. Die Druckobergrenze wird hierbei durch die mit vernünftigem Aufwand produzierbaren Druckspeicherbehälter bestimmt. Prinzipiell sind jedoch beliebig hohe Drücke denk- und realisierbar.

Seit mehr als einem Jahrzehnt wird darüber hinaus auch mit Wasserstoff als Kraftstoff experimentiert, wobei dessen Speicherung in den Fahrzeugen in flüssiger oder gasförmiger bzw. komprimierter Form erfolgt.

Erdgastankstellen, bei denen gattungsgemäße Verfahren zum Betanken zur Anwendung kommen, werden bisher entweder aus einem bestehenden Erdgasnetz - der Druck des Erdgases in derartigen Netzen beträgt üblicherweise ca. 9 bar - oder, wenn kein entsprechendes Erdgasnetz vorhanden ist, aus den vorgenannten Trailern versorgt. Wasserstofftankstellen, von denen bisher nur eine Handvoll existiert, werden ausschließlich über Trailer oder Flüssigwasserstoff-Versorgungsfahrzeuge beliefert.

Im Folgenden seien der Stand der Technik sowie die Erfindung anhand eines Erdgas-Betankungsverfahrens erläutert. Jedoch gelten alle Aussagen gleichermaßen für die Verwendung von Wasserstoff als Kraftstoff.

Die vorgenannten Trailer weisen eine Druckmindererstation auf, in der das in den Trailern gespeicherte Erdgas üblicherweise auf ebenfalls ca. 9 bar entspannt und erst dann der Erdgastankstelle zugeführt wird. Anschließend erfolgt eine zwei- oder mehrstufige Verdichtung des Erdgases auf bis zu 300 bar und mehr.

Das so verdichtete Erdgas wird in zwei bis drei so genannten Banken zwischengespeichert, bevor es aus diesen Banken in den bzw. die Speicherbehälter der zu betankenden Fahrzeuge überführt wird. Die vorgenannten Banken bestehen im Regelfall aus einer Mehrzahl von (Druck)Flaschenbündeln. Aus den Banken erfolgt ein kaskadenmäßiges Befüllen des zu betankenden Fahrzeuges auf den gewünschten Fülldruck - beispielsweise 200 bar (bezogen auf 15 °C) - des oder der Speicherbehälter des zu betankenden Fahrzeuges.

Bei denjenigen Erdgastankstellen bzw. den in ihnen realisierten Verfahren zum Verdichten des Erdgases, die aus den vorbeschriebenen Trailern versorgt werden, wird die für das Befüllen der Trailer aufgebrachte Verdichtungsenergie nicht genutzt, da der Entnahmedruck - wie beschrieben - soweit abgesenkt wird bzw. gesenkt werden muss, dass die erste Verdichterstufe das Erdgas ansaugen kann. Diese ersten Verdichterstufen sind im Regelfall so ausgelegt, dass sie zwischen einigen mbar und ca. 10 bar Ansaugdruck arbeiten.

Wird das Erdgas nunmehr (erneut) auf einen Druck von 200 bar oder mehr verdichtet, so muss zumindest diejenige Verdichtungsleistung, die bereits beim Befüllen des Trailers aufgebracht wurde, nochmals aufgewandt werden.

Aufgabe der vorliegenden Erfindung ist es, ein gattungsgemäßes Verfahren zum Betanken eines Fahrzeugs mit einem unter Druck stehenden Gas, insbesondere mit komprimiertem Erdgas oder komprimiertem Wasserstoff, anzugeben, das es ermöglicht, die vorgenannten Trailer in das gattungsgemäße Verfahren einzubinden, insbesondere von deren Speicherdruck sowie -volumen in energetisch sinnvoller Weise Gebrauch zu machen.

Zur Lösung dieser Aufgabe wird ein Verfahren zum Betanken eines Fahrzeuges mit einem unter Druck stehenden Gas, insbesondere mit komprimiertem Erdgas oder komprimiertem Wasserstoff, vorgeschlagen, das dadurch gekennzeichnet ist, dass
- der oder die Speicherbehälter des zu betankenden Fahrzeuges bis zum Erreichen eines Zwischendruckes aus dem oder den Trailern mit dem unter Druck stehenden Gas befüllt werden und
- nach Erreichen des Zwischendruckes das unter Druck stehende Gas aus dem oder den Trailern zumindest auf den gewünschten Enddruck verdichtet und dem oder den Speicherbehältern des zu betankenden Fahrzeuges zugeführt wird und/oder
- nach Erreichen des Zwischendruckes der oder die Speicherbehälter des zu betankenden Fahrzeuges aus wenigstens einem Zwischenspeicher, in dem verdichtetes Gas zwischengespeichert ist, mit dem unter Druck stehenden Gas befüllt werden.

Das erfindungsgemäße Verfahren zum Betanken eines Fahrzeuges weiterbildend wird vorgeschlagen, dass der Zwischendruck identisch mit dem sich während des Befüllvorganges zwischen dem oder einem der Trailer und dem oder einem der Speicherbehälter des zu betankenden Fahrzeuges einstellenden Ausgleichsdruck ist.

Erfindungsgemäß wird nunmehr wenigstens ein Trailer in ein Verfahren zum Betanken eines Fahrzeuges mit einem unter Druck stehenden Gas, insbesondere mit komprimiertem Erdgas oder komprimiertem Wasserstoff, eingebunden. Daraus resultieren mehrere Vorteile. Zum einen dient der Trailer selbst als (Zwischen)Speicher, aus dem unmittelbar das Befüllen des oder der Speicherbehälter des zu betankenden Fahrzeuges erfolgt. Zum anderen kann das Gas aus einem Trailer auch auf einen gewünschten Enddruck verdichtet und einem Zwischenspeicher zugeführt werden, wobei der oder die Speicherbehälter des zu betankenden Fahrzeuges aus diesem Zwischenspeicher wiederum auf den gewünschten Enddruck befüllt werden.

Gemäß einer vorteilhaften Ausgestaltung des erfindungsgemäßen Verfahrens zum Betanken eines Fahrzeuges erfolgt die Verdichtung des Gases aus dem oder den Trailern mittels lediglich einer Verdichterstufe. Diese ist vorzugsweise für einen Eingangsdruck zwischen 10 und 250 bar, insbesondere zwischen 15 und 200 bar ausgelegt.

Da nunmehr das in den Trailern unter einem Druck von ca. 200 bar vorliegende Gas bzw. Erdgas vor der Zuführung nicht entspannt wird und damit die bereits geleistete Verdichtungsarbeit nicht umsonst erbracht wurde, ist bei den heute üblicherweise gewünschten Enddrücken - diese liegen zwischen 200 und 300 bar - eine Verdichtung des aus dem Trailer angezogenen Erdgases mittels lediglich einer Verdichterstufe ausreichend.

Dadurch werden zum einen die Investitions- sowie Wartungskosten verringert und zum anderen wird der für die Verdichtung des Erdgases auf den gewünschten Enddruck erforderliche Energieaufwand minimiert. Zudem fällt weniger Verdichtungswärme an, was zur Folge hat, dass die für die Abführung der Verdichtungswärme erforderlichen Einrichtungen kleiner dimensioniert werden können bzw. der erforderliche Energiebedarf reduziert werden kann.

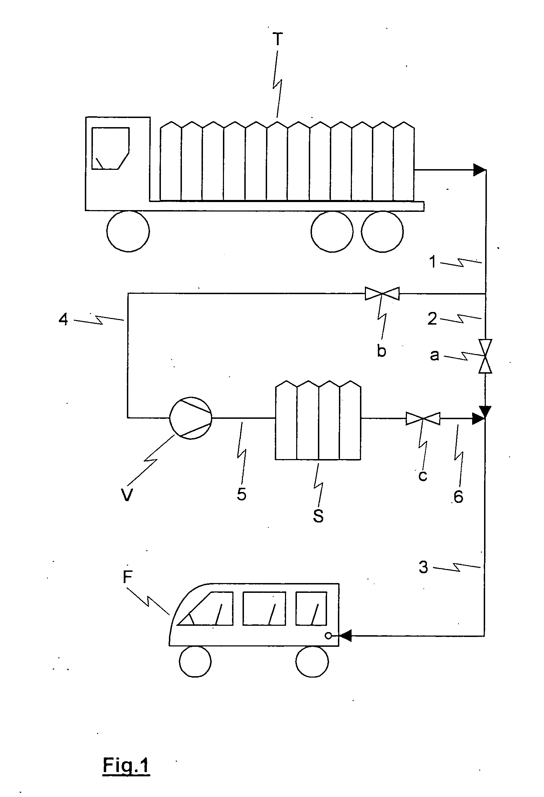

Das erfindungsgemäße Verfahren sowie weitere Ausgestaltung desselben seien nachfolgend anhand des in der Figur dargestellten Ausführungsbeispieles, das eine Erdgastankstelle zeigt, näher erläutert.

Die Figur zeigt einen Trailer T sowie ein mit Erdgas zu betankendes Fahrzeug F. Aus dem Trailer T, der beispielsweise ein Speichervolumen von 6000 m³ aufweist und in dem das Erdgas unter einem Druck von 200 bar gespeichert ist, erfolgt bei geöffnetem Ventil a und geschlossenen Ventilen b und c über die Leitungsabschnitte 1, 2 und 3 ein Befüllen des oder der Speicherbehälter des zu betankenden Fahrzeuges F bis zum Erreichen eines eingestellten bzw. einstellbaren Zwischendruckes oder bis zum Erreichen des Ausgleichsdruckes zwischen Trailer T und dem. Speicherbehälter des zu betankenden Fahrzeuges F.

Nach dem Erreichen des Zwischen- oder Ausgleichsdruckes kann das unter Druck stehende Erdgas aus dem Trailer T bei geöffnetem Ventil b über die Leitungsabschnitte 1 und 4 dem ein- oder mehrstufig, vorzugsweise einstufig ausgeführten Verdichter V zugeführt und in ihm auf den gewünschten End- bzw. Speicherdruck - beispielsweise 300 bar und mehr - komprimiert werden.

Anschließend wird das verdichtete Erdgas bei geöffnetem Ventil c über die Leitungsabschnitte 5, 6 und 3 dem oder den Speicherbehältern des zu betankenden Fahrzeuges F zugeführt.

Bei dieser Verfahrensweise kann auf den in der Figur dargestellten Zwischenspeicher S verzichtet oder dieser umgangen werden.

Alternativ oder ergänzend kann nach dem Erreichen des Zwischen- oder Ausgleichsdruckes auch ein Befüllen des oder der Speicherbehälter des zu betankenden Fahrzeuges F aus dem oder einem von mehreren Zwischenspeichem S erfolgen. Dazu muss der Zwischenspeicher S jedoch zuvor mit verdichtetem Erdgas befüllt werden.

Bei dieser Verfahrensweise wird der Zwischenspeicher S bei geöffnetem Ventil c über die Leitungsabschnitte 6 und 3 mit dem oder den Speicherbehältern des zu betankenden Fahrzeuges F verbunden.

Um den Zwischenspeicher S zu befüllen, wird bei geöffnetem Ventil b und geschlossenem Ventil c aus dem Trailer T Erdgas über die Leitungsabschnitte 1 und 4 dem Verdichter V zugeführt und in diesem von dem in dem Trailer T herrschenden Druck auf den gewünschten Speicherdruck - beispielsweise 300 bar und mehr - verdichtet. Das im Verdichter V verdichtete Erdgas wird anschließend über die Leitung 5 dem Zwischenspeicher S zugeführt.

Gemäß einer weiteren vorteilhaften Ausgestaltung des erfindungsgemäßen Verfahrens zum Betanken eines Fahrzeuges erfolgt die Zwischenspeicherung des verdichteten Gases auf einem oder mehreren Druckniveaus.

Diese vorteilhafte Ausgestaltung des erfindungsgemäßen Verfahrens bietet den Vorteil, dass die Betankung eines Fahrzeuges kaskadenmäßig erfolgen kann; dadurch kann zum einen der Befüllvorgang verkürzt und es können zum anderen die Speichervolumina der einzelnen Zwischenspeicher effizient genutzt werden. Dies gilt insbesondere dann, wenn innerhalb eines kurzen Zeitintervalles mehrere Fahrzeuge nacheinander und/oder zeitgleich betankt werden sollen.

Prinzipiell kann auf den in der Figur dargestellten Zwischenspeicher S auch verzichtet werden. Er ist jedoch insbesondere dann von Vorteil, wenn innerhalb eines kurzen Zeitintervalles mehrere Fahrzeuge nacheinander und/oder zeitgleich betankt werden müssen, da dann die Betankungszeiten aufgrund des Vorsehens des Zwischenspeichers S verkürzt werden. Daher sind bei einer Vielzahl von Anwendungsfällen zweckmäßigerweise auch mehrere Zwischenspeicher S - ggf. für unterschiedliche Druckniveaus ausgelegt-vorzusehen.

Es sei nochmals betont, dass das erfindungsgemäße Verfahren zum Betanken eines Fahrzeuges mit einem unter Druck stehenden Gas im Prinzip auf jedes beliebige kompressible Gas anwendbar ist.

## Patentansprüche

1. Verfahren zum Betanken eines Fahrzeuges mit einem unter Druck stehenden Gas, insbesondere mit komprimiertem Erdgas oder komprimiertem Wasserstoff, wobei das unter Druck stehende Gas mittels eines oder mehrerer Trailer bereitgestellt wird, **dadurch gekennzeichnet, dass**
- der oder die Speicherbehälter des zu betankenden Fahrzeuges (F) bis zum Erreichen eines Zwischendruckes aus dem oder den Trailem (T) mit dem unter Druck stehenden Gas befüllt werden und
- nach Erreichen des Zwischendruckes das unter Druck stehende Gas aus dem oder den Trailern (T) zumindest auf den gewünschten Enddruck verdichtet (V) und dem oder den Speicherbehältern des zu betankenden Fahrzeuges (F) zugeführt wird und/oder
- nach Erreichen des Zwischendruckes der oder die Speicherbehälter des zu betankenden Fahrzeuges (F) aus wenigstens einem Zwischenspeicher (S), in dem verdichtetes (V) Gas zwischengespeichert ist, mit dem unter Druck stehenden Gas befüllt werden.

2. Verfahren nach Anspruch 1, **dadurch gekennzeichnet, dass** der Zwischendruck identisch mit dem sich während des Befüllvorganges zwischen dem oder einem der Trailer und dem oder einem der Speicherbehälter des zu betankenden Fahrzeuges einstellenden Ausgleichsdruck ist.

3. Verfahren nach Anspruch 1 oder 2, **dadurch gekennzeichnet, dass** die Verdichtung (V) des Gases aus dem oder den Trailern (T) mittels lediglich einer Verdichterstufe (V) erfolgt.

4. Verfahren nach einem der vorhergehenden Ansprüche 1 bis 3, **dadurch gekennzeichnet, dass** die Verdichterstufe (V) für einen Eingangsdruck zwischen 10 und 250 bar, vorzugsweise zwischen 15 und 200 bar ausgelegt ist.

5. Verfahren nach einem der vorhergehenden Ansprüche 1 bis 4, **dadurch gekennzeichnet, dass** die Zwischenspeicherung (S) des verdichteten (V) Gases auf einem oder mehreren Druckniveaus erfolgt.
